# EUROPÄISCHE PATENTSCHRIFT

(11) **EP 0 278 214 B1**
(45) Veröffentlichungstag und Bekanntmachung des Hinweises auf die Patenterteilung: **17.03.1993**
(21) Anmeldenummer: 88100060.8
(22) Anmeldetag: 05.01.1988
(51) Int. Cl.: F24D 3/14

(54) **Anordnung zur Beheizung eines Bodens**
Arrangement for heating a floor
Arrangement pour chauffer un plancher

(30) Priorität: 12.02.1987 DE 3704422
(43) Veröffentlichungstag der Anmeldung: 17.08.1988
(73) Patentinhaber: PVG Patent-Verwertungsgesellschaft mbH, 52388 Nörvenich (DE)
(72) Erfinder: Kahlert, Wolfgang, D-5600 Wuppertal 2 (DE)
(74) Vertreter: Reinhard - Skuhra - Weise & Partner

(56) Entgegenhaltungen:
- DE-A- 2 361 137
- US-A- 3 568 924
- US-A- 4 164 933

## Beschreibung

Die Erfindung betrifft eine Anordnung zur Beheizung eines Bodens gemäß dem Oberbegriff des Patentanspruchs 1.

Eine Anordnung gemäß dem Oberbegriff des Patentanspruchs 1 ist aus der US-A-3 568 924 bekannt. Bei dieser Anordnung sind Vorund Rücklaufleitungen in einer Sandschicht verlaufend bis zu einem Verteilerstück verlegt, das sich in einem Schacht befindet. Der Schacht ist im Bereich einer Dehnungsfuge angeordnet. Von dem Verteilerstück gehen die einzelnen Heizungsrohre aus und sind über die durch die Dehnungsfuge voneinander getrennten Felder verlaufend verlegt.

Die US-A-4 164 933 beschreibt plattenförmige Solarkollektoren, die aus Beton vergossen sind und rohrförmige Durchgangskanäle aufweisen.

In der DE-A-1 900 616 ist eine Anordnung zur Beheizung eines Bodes in Form einer Schicht aus Beton oder dergleichen beschrieben, die auf einer Dämmschicht angeordnet und von in Horizontalrichtung verlaufenden Heizungsrohren durchsetzt ist.

Der Erfindung liegt die Aufgabe zugrunde, eine Anordnung gemäß dem Oberbegriff des Patentanspruchs 1 derart auszubilden, daß eine Beheizung der Betonfelder ohne Beschädigung der integrierten Heizungsrohre über einen sehr langen Zeitraum sichergestellt ist.

Diese Aufgabe wird erfindungsgemäß durch die im kennzeichnenden Teil des Patentanspruchs 1 angegebenen Merkmale gelöst.

Weitere Ausgestaltungen der Erfindung ergeben sich aus den Unteransprüchen.

Die Erfindung beschäftigt sich mit einer Anordnung zur Beheizung von Böden, insbesondere Industrie-Betonböden oder im von Freien befindlichen Betonfeldern verschiedener Größenordnung. Solche Betonfelder oder Industrie-Betonböden bestehen aus mehreren Einheiten von jeweils mehreren 100 m², oder aus mehreren Feldern mit jeweils einer Fläche von 5 x 5 m oder 6 x 6 m, die eine Start- und Landebahn oder andere Betonflächen bilden. Es ist erwünscht, solche Felder durch Beheizung schnee- und/oder eisfrei zu halten bzw. ganze Industriehallen zu beheizen, wobei auf die an sich bekannten Probleme der Ausdehnung der Betonfelder infolge von Außentemperaturschwankungen einerseits und Temperaturänderungen durch eine integrierte Heizung andererseits Rücksicht zu nehmen ist.

Die Erfindung schafft eine Anordnung zur Beheizung von Böden mit besonders hohen Verkehrslasten (beispielsweise 5 kN/m² bei Garagen bis zu 30 kN/m² bei Flugzeughangars oder schweren Maschinenfabriken), insbesondere von Industrie-Böden und/oder Start- und Landebahnen sowie Hubschrauber-Landeplätzen, wobei die Gesamtfläche eines solchen beheizten Bodens unterschiedlichster Größe sein kann. Im Industriebau können die einzelnen Flächen in der Größenordnung von beispielsweise 300 m² liegen, bei Freiflächen (Start- und Landebahnen sowie Hubschrauber-Landeplätzen) liegen die die Gesamtfläche angebenden einzelnen Felder je nach Dicke der Betonplatte bei 5 x 5 m oder 6 x 6 m. Bei derart großen Betonfeldern wird zur Kompensation der Dehnungscharakteristik des Betons zwischen den einzelnen Feldern eine Dehnungsfuge vorgesehen. Solche Dehnungsfugen sind problematisch, wenn der Betonboden mit Heizungsrohren, vorzugsweise aus Kunststoff, versehen wird, die zur Aufheizung des Betonbodens mit einem Heizmedium, wie Warmwasser, beschickt werden. Durch die erfindungsgemäße Anordnung der Verbindungsrohre, welche die Heizrohre der einzelnen Felder miteinander verbinden, wird sichergestellt, daß eine Beschädigung der Heizungs- oder Verbindungsrohre im Bereich der Dehnungsfugen verhindert wird. Es hat sich gezeigt, daß die Durchführung der Verbindungsrohre unterhalb der Dehnungsfugen vorteilhafterweise Stauchungen des Verbindungsrohres im Vergleich mit der Durchführung der Verbindungsrohre durch die Dehnungsfuge verhindert, da das Verbindungsrohr im Bereich der Dehnungsfugen außerhalb der Betonschicht liegt und damit der Ausdehnung der beiden Betonfelder nicht ausgesetzt ist.

Die Führung der Verbindungsrohre unterhalb der Dehnungsfuge hat den weiteren Vorteil, daß die Dehnungsfuge in ihrer eigentlichen Funktion durch die Verbindungsrohre nicht beeinträchtigt wird, d.h. sich die benachbarten Felder in der notwendigen Weise ausdehnen oder zusammenziehen können. Vergleichsversuche mit Anordnungen, bei welchen die Verbindungsrohre direkt durch die Dehnungsfuge geführt wurden, haben ergeben, daß hierbei die Verbindungsrohre im Bereich der Dehnungsfugen Stauchungen ausgesetzt sind infolge der Ausdehnung bzw. des Zusammenziehens der einzelnen Felder, so daß die Lebensdauer der Verbindungsrohre bzw. Heizungsrohre im Bereich der Dehnungsfugen wesentlich verringert wird. Weitere Versuche, bei denen die Dehnungsfuge weggelassen wurde, haben ergeben, daß in der Betonschicht Risse auftreten, welche die Kunststoffrohre beschädigen, beispielsweise infolge vertikaler Abscherung.

Die Erfindung schafft damit eine Anordnung, bei welcher die Dehnungsfugen zwischen den einzelnen Feldern beibehalten werden können, ferner die Lebensdauer der Heizungsrohre (bei Kunststoffrohren laut DIN 4726 mindestens 50 Jahre mit Sicherheitsfaktor)
nicht beeinträchtigt und dabei die Funktion der Dehnungsfuge erhalten bleibt.

Mit der erfindungsgemäßen Anordnung wird vorteilhafterweise der Hydratationsprozeß (Abbindungsprozeß von Beton) nicht beeinträchtigt und der Ausdehnungskoeffizient der Betonfelder infolge von Außentemperaturschwankungen einerseits und Temperaturänderungen durch die integrierte Heizung andererseits, d.h. die Ausdehnung und Schrumpfung der Betonfelder unbeeinflußt gelassen.

Die in der Anordnung verwendeten Heizungsrohre bestehen vorzugsweise aus Kunststoff und haben gemäß einer vorteilhaften Ausführungsform ovalen bzw. elliptischen Querschnitt. Ferner erfüllt die Dehnungsfuge ihre volle Funktion insoweit, als daß nach Beendigung der Heizperiode die durch das Abkühlen der Betonplatten auftretenden Zugspannungen aufgenommen werden.

Im folgenden werden bevorzugte Ausführungsformen der Anordnung anhand der Zeichnung zur Erläuterung weiterer Merkmale beschrieben.

Es zeigen:
- Fig. 1: eine perspektivische Teildarstellung zweier Felder eines beheizten Betonbodens,
- Fig. 2: eine Teilschnittansicht im Bereich der Dehnungsfuge,
- Fig. 3: eine Teilschnittansicht eines Feldes zur Erläuterung der Herausführung der Verbindungsrohre aus der Dämmschicht in die Betonschicht, und
- Fig. 4: eine perspektivische Teildarstellung entsprechend Fig. 1 zur Erläuterung einer weiteren Ausführungsform.

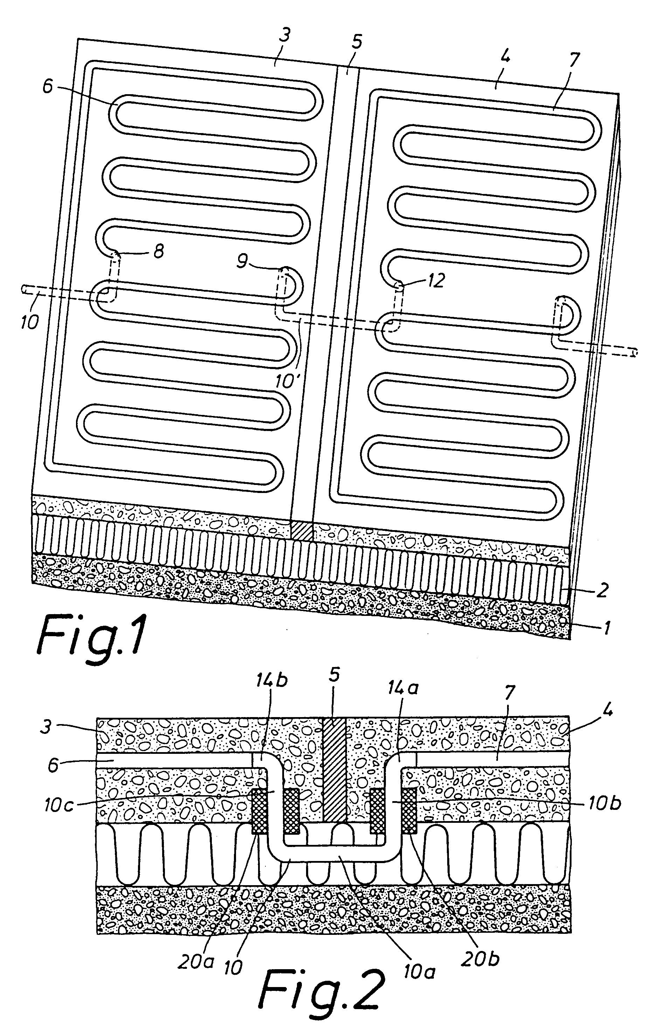

Fig. 1 zeigt eine perspektivische Teilansicht eines beheizten Bodens, insbesondere eines Industrie-Betonbodens, wobei lediglich zwei Felder dieses Bodens veranschaulicht sind. Auf einer Tragschicht 1, z.B. Walzbeton B 25, befindet sich eine Dämmschicht 2, auf welcher die in Form von Feldern unterteilten Beton-Platten 3, 4 ausgebildet sind. Zwischen den einzelnen Beton-Platten bzw. Feldern 3, 4 verläuft eine Dehnungsfuge 5, die somit die zueinander benachbarten Felder voneinander trennt. In den Platten 3, 4 eingegossen sind die z.B. schlangenförmig oder mäanderförmig verlegten Heizungsrohre 6, 7, die vorzugsweise aus Kunststoff bestehen und gemäß einer weiteren Ausführungsform ovalen bzw. elliptischen Querschnitt haben. Diese Heizungsrohre 6, 7 werden in bekannter Weise vor dem Gießen der Beton-Platten 3, 4 gegenüber der Dämmschicht 2 fixiert. Außerdem können die Beton-Platten 3, 4 mit Bewehrungen bzw. Baustahlmatten versehen sein, um eine höhere Festigkeit der Beton-Platten 3, 4 zu erreichen.

Wie aus Fig. 1 erkennbar ist, liegen die Dehnungsfugen 5 oberhalb der Dämmschicht 2 zwischen den einzelnen Feldern bzw. Platten 3, 4. Diese Dehnungsfugen 5 haben vorzugsweise eine Breite von 20 mm sowie eine der Höhe der Platten 3, 4 entsprechende Höhe und sind durch weiches Dämmaterial oder dergleichen in ebenfalls an sich bekannter Weise ausgefüllt. Nach Fig. 1 ist pro Feld oder Beton-Platte 3, 4 ein einen Heizkreis darstellendes Heizungsrohr vorgesehen, das einen Vorlaufanschluß 8 und einen Rücklaufanschluß 9 aufweist, so daß z.B. das Heizungsrohr 6 vom Vorlaufanschluß 8 im wesentlichen in einer Ebene bis zum einen Ende des Feldes 36, dann zurück zum anderen Ende und bis zum Rücklaufanschluß 9 verläuft. Wie Fig. 1 zeigt, sind Vorlaufanschluß 8 und Rücklaufanschluß 9 in Abstand zueinander vorgesehen und liegen nahe dem seitlichen Rand des betreffenden Feldes 3 bzw. 4. Wie in Verbindung mit Fig. 2 detailliert beschrieben wird, steht der Vorlaufanschluß 8 über ein Verbindungsrohr 10 beispielsweise mit dem Rücklaufanschluß des Heizungsrohres des benachbarten und in Fig. 1 nicht gezeigten Feldes in Verbindung, während der Rücklaufanschluß 9 des Heizungsrohres 6 über ein entsprechendes Verbindungsrohr 10' mit dem Vorlaufanschluß 12 des Heizungsrohres 7 in Verbindung steht. Gemäß Fig. 2 haben die Verbindungsrohre im wesentlichen die Form eines U. Jedes Verbindungsrohr besitzt demnach eine im wesentlichen horizontal verlaufende Basis 10a und seitlich von der Basis hochgezogene Schenkel 10b und 10c, die an ihren Enden mit einem winkelförmigen Abschnitt versehen sein können, um einen Anschluß mit dem in horizontaler Ebene verlaufenden Heizungsrohr 6 bzw. 7 zu erleichtern. Wesentlich ist, daß die Basis des Verbindungsrohres 10 in der Ebene der Dämmschicht 2 verläuft und damit die zugehörige und zwischen den jeweiligen benachbarten Feldern verlaufende Dehnungsfuge 5 unterläuft. Die Schenkel des U-förmigen Verbindungsrohrs 10 sind aus der Dämmschicht 2 heraus nach oben geführt und ragen demzufolge in die Beton-Platte 3, 4 im Bereich der konzipierten Vorlauf- bzw. Rücklaufanschlüsse 8, 9 bzw. 12 hinein. Durch die Anordnung des Verbindungsrohrs 10 gemäß Fig. 2 wird damit erreicht, daß die Dehnungsfuge 5 von dem Verbindungsrohr 10 nicht durchdrungen wird und damit ihre Funktion voll erfüllt. Jedes Verbindungsrohr 10 besteht vorzugsweise ebenso wie das Heizungsrohr 6 bzw. 7 aus Kunststoff und wird vorzugsweise in der in Fig. 2 gezeigten Form mit endseitigen Anschlußwinkeln 14, 14b vorgefertigt, so daß an der Baustelle vor dem Einbringen des Betons lediglich eine Verbindung oder Verschweißung zwischen den Anschlußstücken 14a, 14b einerseits und den Vor- bzw. Rücklaufanschlüssen der Heizungsrohre 6, 7 andererseits vorgenommen werden muß.

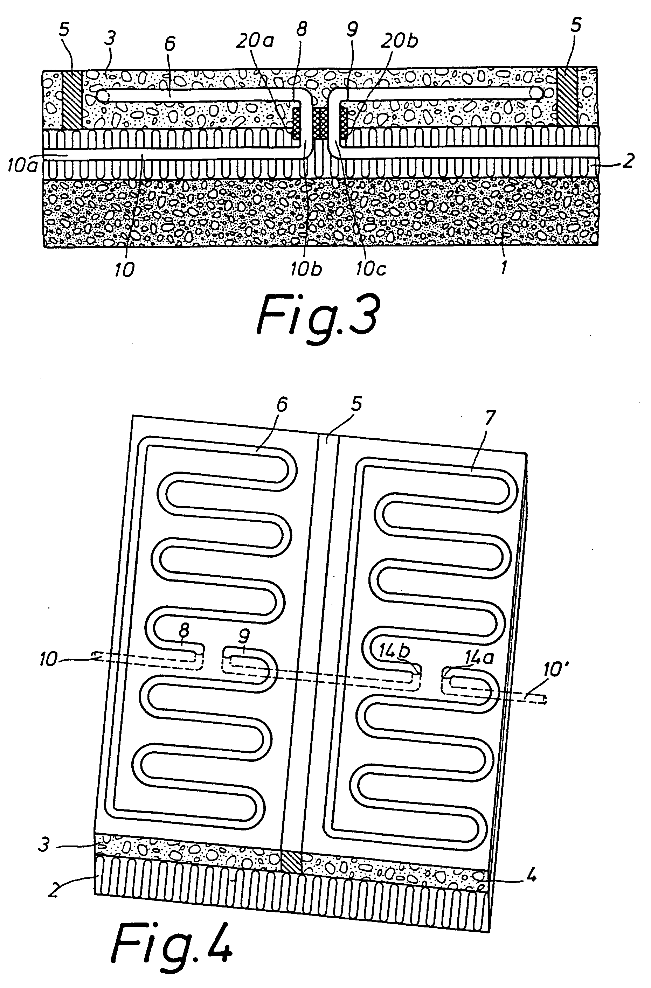

Während bei dem beheizbaren Boden nach Fig. 1 und 2 die Vorlauf- und Rücklaufanschlüsse 8, 9 nahe dem Seitenrand des jeweiligen Feldes vorgesehen sind, kann es erwünscht sein, diese Vor- und Rücklaufanschlüsse 8, 9 möglichst zentral, d.h. mittig in jedem Feld vorzusehen. Eine derart abgewandelte Ausführungsform wird in Verbindung mit Fig. 3 und 4 beschrieben. Um eine solche mittige Herausführung der vertikalen Rohrabschnitte 10b, 10c des Verbindungsrohrs 10 zu ermöglichen, ist es erforderlich, die Basis des Verbindungsrohres 10a im Gegensatz zu Fig. 2 erheblich länger zu dimensionieren. Auch bei dieser Ausführungsform verläuft die Basis 10a vollständig innerhalb der Ebene der Dämmschicht 2 bis etwa zur Mitte des zugehörigen Feldes bzw. der zugehörigen Beton-Schicht und geht dann im wesentlichen senkrecht nach oben aus der Dämmschicht heraus in die Ebene der Platte 3, 4 um einen Anschluß mit dem Vor- und Rücklaufanschluß 8 bzw. 9 des Heizungsrohres 6 in der Weise zu ermöglichen, wie dies unter Bezugnahme auf Fig. 2 beschrieben ist. Die vertikale Rohrführung der Schenkel 10b, 10c des Verbindungsrohres 10 in der Mitte des jeweiligen Feldes hat den Vorteil, daß diese Rohrabschnitte 10b, 10c weitgehend spannungsfrei in die Heizebene bzw. in die Platten 3, 4 hineinlaufen. Die Ursache für diese weitgehend spannungsfreie Führung der Schenkel 10b, 10c der Verbindungsrohre 10 in die Heizebene hinein liegt darin, daß sich das Betonfeld in seiner Mitte im Vergleich zu den Rändern nur geringfügig ausdehnt. Damit ist bei dieser Ausführungsform eine noch geringere Beanspruchung der Verbindungsrohrabschnitte 10b, 10c im Bereich ihrer Herausführung aus der Dämmschicht 2 gewährleistet. Besonders vorteilhaft wirkt sich die beschriebene Anordnung bei Freiflächenheizungen aus, da deren Betonfelder im Sommer durch starke Sonneneinstrahlung einer noch größeren Ausdehnung ausgesetzt sind als Betonfelder in Hallen durch deren Erwärmung im Winter. Um die in Fig. 3 gezeigte Herausführung der Verbindungsrohrschenkel 10b, 10c zu ermöglichen, sind die Vorlauf- und Rücklaufanschlüsse der Heizungsrohre 6, 7 gemäß Fig. 4 möglichst nahe in das Zentrum bzw. die Mitte der jeweiligen Felder zu verlegen, d.h. die Vorlauf- und Rücklaufanschlüsse haben einen sehr geringen Abstand zueinander, wie aus Fig. 4 ohne weiteres erkennbar ist. Im Gegensatz zu Fig. 2 werden hierbei die Winkelanschlüsse 14a, 14b derart an den Schenkeln 10b, 10c angesetzt, daß sie aufeinander zu weisen, während nach Fig. 2 die Winkelanschlüsse 14a, 14b von-einander weg weisen.

Insbesondere bei Hubschrauber-Landeplätzen sowie Start- und Landebahnen kann es zweckmäßig sein, die mit den Vor- und Rücklaufleitungen in Verbindung stehenden Verbindungsrohre unterhalb der Beton-Platten 3, 4 in separat hierzu vorgesehenen Schächten zu führen, bevor die Verbindungsrohrschenkel 10b, 10c gemäß Fig. 3 zum Heizkreis bzw. zu den Heizrohren 6, 7 in die Schichten 3, 4 hochgeführt werden. Die in den Zeichnungen nicht gezeigten Schächte werden zweckmäßigerweise zur Verhinderung von Ausdehnungen der Verbindungsrohre mit Estrich oder Beton verfüllt.

Lediglich als Beispiel sei angegeben, daß die einzelnen Felder bzw. Betonschichten eine Größe von 5 x 5 m, 6 x 6 m oder bei Industrie-Betonböden auch eine Fläche von jeweils 300 m² abdekken. Die Fugen haben vorzugsweise eine Breite von 20 mm, die Dämmschicht 2 eine Dicke von mindestens 40 mm.

Die Platten 3, 4 bestehen vorzugsweise aus Beton oder einem Betongesmisch und können bei entsprechender Dicke mit zusätzlichen Bewehrungen zur Erhöhung der Festigkeit versehen sein.

Besonders vorteilhaft ist die Verwendung von Verbindungsrohren 10 aus Polybuthen, das eine besonders formstabile Eigenschaft des Verbindungsrohres gewährleistet nach der fabrikatorischen Verformung in die U-förmige Gestalt. Die Heizungsrohre und/oder Verbindungsrohre können jedoch generell auch aus Metall bestehen.

Gemäß der Erfindung wird das Verbindungsrohr 10 im Bereich seiner vertikal verlaufenden Abschnitte 10c, 10b derart mit einer Schaum-Ummantelung 20a, 20b versehen, daß zumindest die Teile der Abschnitte 10b, 10c, die aus der Dämmschicht 2 herauslaufen, ummantelt sind und damitnicht in direktem Kontakt mit der Beton-Platte 3, 4 stehen.

## Patentansprüche

1. Anordnung zur Beheizung eines Bodens in Form einer Schicht aus Beton oder dergleichen, die von in horizontaler Richtung verlaufenden Heizungsrohren durchsetzt ist, wobei der Boden in mehrere Felder (3, 4) unterteilt ist und zwischen den benachbarten Feldern (3, 4) eine Dehnungsfuge (5) ausgebildet ist, und mit einer unter der Betonschicht liegenden Dämmschicht,
**dadurch gekennzeichnet, daß** zur Verbindung der Heizungsrohre (6, 7) benachbarter Felder (3, 4) ein im wesentlichen U-förmiges Verbindungsrohr (10) vorgesehen ist, dessen Basis (10a) im Bereich der Dehnungsfuge (5) in der Ebene der Dämmschicht (2) liegt, und
daß die Schenkel (10b, 10c) jedes Verbindungsrohres (10) zumindest in dem Bereich, in welchem sie aus der Dämmschicht (2) in die Betonschicht (3, 4) reichen, mit einer Ummantelung (20a, 20b) versehen sind.

2. Anordnung nach Anspruch 1, dadurch gekennzeichnet, daß die Basis (10a) des Verbindungsrohres (10) unterhalb einer Dehnungsfuge (5) verläuft.

3. Anordnung nach Anspruch 1 oder 2, dadurch gekennzeichnet, daß die Schenkel (10b, 10c) jedes Verbindungsrohres (10) im wesentlichen vertikal verlaufen.

4. Anordnung nach einem der vorangehenden Ansprüche, dadurch gekennzeichnet, daß jedes Verbindungsrohr (10) jeweils einen Anschluß (9, 12) aufweist, der mittig in einem der benachbarten Felder (3, 4) liegt und mit jeweils einem Ende des in dem Feld (3, 4) angeordneten Heizungsrohres (6, 7) verbunden ist.

5. Anordnung nach wenigstens einem der vorangehenden Ansprüche, dadurch gekennzeichnet, daß jedes Verbindungsrohr (10) mit am oberen Ende seiner Schenkel (10b, 10c) angeordneten Anschlußwinkeln (14a, 14) versehen ist.

6. Anordnung nach Anspruch 5, dadurch gekennzeichnet, daß die Anschlußwinkel (14a, 14b) durch einen 90°-Winkel definiert sind.

7. Anordnung nach einem der vorangehenden Ansprüche, dadurch gekennzeichnet, daß die Schenkel (10b, 10c) des Verbindungsrohres (10) seitlich der Dehnungsfuge (5) verlaufen.

## Claims

1. Floor heating arrangement in the form of a layer of concrete or the like, which is penetrated by heating pipes extending in the horizontal direction, the floor being subdivided into a plurality of areas (3, 4) and an expansion joint (5) being formed between the adjacent areas (3, 4), and having an insulating layer lying below the concrete layer, characterised in that, in order to connect the heating pipes (6, 7) of adjacent areas (3, 4), there is provided a substantially U-shaped connection pipe (10) of which the base (10a) is in the vicinity of the expansion joint (5) in the plane of the insulating layer (2); and in that the legs (10b, 10c) of each connection pipe (10) are provided with a sheathing (20a, 20b), at least in the region in which they extend out of the insulating layer (2) into the concrete layer (3, 4).

2. Arrangement according to Claim 1, characterized in that the base (10a) of the connection pipe (10) extends below an expansion joint (5).

3. Arrangement according to Claim 1 or 2, characterised in that the legs (10b, 10c) of each connection pipe (10) are substantially vertical.

4. Arrangement according to any one of the preceding claims, characterised in that each connection pipe (10) comprises a connection (9, 12) which lies centrally in one of the adjacent areas (3, 4) and is connected in each case to one end of the heating pipe (6, 7) disposed in the area (3, 4).

5. Arrangement according to at least one of the preceding claims, characterised in that each connection pipe (10) is provided with connection corners (14a, 14b) disposed at the upper end of its legs (10b, 10c).

6. Arrangement according to Claim 5, characterised in that the connection corners (14a, 14b) are defined by a 90° angle.

7. Arrangement according to any one of the preceding claims, characterised in that the legs (10b, 10c) of the connection pipe (10) extend laterally of the expansion joint (5).

## Revendications

1. Dispositif de chauffage d'un revêtement de sol se présentant sous la forme d'une couche en béton ou analogue qui est traversée par des tuyaux de chauffage s'étendant selon une direction horizontale, le revêtement de sol étant divisé en plusieurs panneaux (3, 4) et un joint de dilatation (5) étant réalisé entre les panneaux (3, 4) voisins, tandis que ce revêtement de sol comporte encore une couche d'isolation disposée au-dessous de la couche en béton,
caractérisé en ce que, pour réunir les tuyaux de chauffage (6, 7) de panneaux (3, 4) voisins, il est prévu un tuyau de jonction (10) essentiellement en U dont la base (10a) est située, dans la zone du joint de dilatation (5), dans le plan de la couche d'isolation (2) et en ce que les branches (10b, 10c) de chaque tuyau de jonction (10) sont pourvues d'une gaine (20a, 20b) au moins dans la zone dans laquelle elles passent de la couche d'isolation (2) à la couche en béton (3, 4).

2. Dispositif suivant la revendication 1, caractérisé en ce que la base (10a) du tuyau de jonction (10) s'étend au-dessous d'un joint de dilatation (5).

3. Dispositif suivant l'une des revendications 1 et 2, caractérisé en ce que les branches (10b, 10c) de chaque tuyau de jonction (10) s'étendent d'une manière essentiellement verticale.

4. Dispositif suivant l'une des revendications précédentes, caractérisé en ce que chaque tuyau de jonction (10) comporte un raccord (9, 12) qui est disposé au centre de l'un des panneaux (3, 4) voisins et qui est raccordé à une extrémité du tuyau de chauffage (6, 7) disposé dans ce panneau (3, 4).

5. Dispositif suivant l'une au moins des revendications précédentes, caractérisé en ce que chaque tuyau de jonction (10) est pourvu de coudes de raccordement (14a, 14b) situés à l'extrémité supérieure de ses branches (10b, 10c).

6. Dispositif suivant la revendication 5, caractérisé en ce que les coudes de raccordement (14a, 14b) forment un angle de 90°.

7. Dispositif suivant l'une des revendications précédentes, caractérisé en ce que les branches (10b, 10c) du tuyau de jonction (10) s'étendent latéralement par rapport au joint de dilatation (5).
